# EUROPEAN PATENT APPLICATION

(11) **EP 4 084 524 A1**
(43) Date of publication of application: **02.11.2022**
(21) Application number: 20916123.1
(22) Date of filing: 21.01.2020
(51) Int. Cl.: H04W 24/10

(54) **COMMUNICATION METHOD AND APPARATUS**

(71) Applicant: Huawei Technologies Co., Ltd., Shenzhen, Guangdong 518129 (CN)
(72) Inventor: HUANG, Huang, Shenzhen, Guangdong 518129 (CN); GAO, Kuandong, Shenzhen, Guangdong 518129 (CN)
(74) Representative: Grünecker Patent- und Rechtsanwälte PartG mbB
(86) International application number: PCT/CN2020/073653
(87) International publication number: WO 2021/146966

(57) **Abstract**

This application provides a communication method and apparatus, and relates to the field of communication technologies, to reduce power consumption of a terminal. The method includes: A network device generates CSI-RS configuration information and sends the CSI-RS configuration information to the terminal, where the CSI-RS configuration information includes first indication information, and the first indication information is used to indicate the terminal to receive a first CSI-RS in first duration that is after the terminal enters an idle mode or an inactive mode. In this way, when the terminal enters the idle mode or the inactive mode, beam training may be performed by using the CSI-RS. Power consumption generated when the terminal performs beam training by using the CSI-RS is less than power consumption generated when the terminal performs beam training by using an SSB. Therefore, the communication method provided in this application may reduce the power consumption of the terminal.

## Description

### TECHNICAL FIELD

This application relates to the field of communication technologies, and in particular, to a communication method and apparatus.

### BACKGROUND

Development of mobile services poses increasingly high requirements on a data rate and efficiency in wireless communication. In a future wireless communication system, a beamforming technology is used to limit energy of a transmission signal in a beam direction, to improve signal receiving efficiency. The beamforming technology may effectively expand a transmission range of a radio signal and reduce signal interference, to implement higher communication efficiency and obtain a higher network capacity.

However, in a communication network using the beamforming technology, a transmit beam and a receive beam first need to be matched, to enable a gain from a transmit end to a receive end to be maximum. Otherwise, high communication efficiency cannot be implemented. Specifically, matching between a transmit beam and a receive beam may be implemented through beam training.

Currently, when a terminal is in a connected mode, the terminal performs beam training by using a channel state information reference signal (channel state information reference signal, CSI-RS) configured by a network device for the terminal. When the terminal is in an idle mode or an inactive mode, the terminal performs beam training by using a synchronization signal block (synchronization signal block, SSB) configured by the network device for the terminal. Power consumption generated during beam training is related to a quantity of antennas of the terminal and a periodicity of a received signal (the CSI-RS or the SSB). Because a periodicity of an SSB is long (usually 20 ms), the terminal needs to spend long time in performing beam training. Consequently, power consumption of the terminal increases.

### SUMMARY

This application provides a communication method and apparatus, to resolve a problem that power consumption of a terminal is high when the terminal in an idle mode performs beam training by using an SSB in a conventional technology.

To resolve the foregoing problem, the following technical solutions are used in this application.

According to a first aspect, this application provides a communication method. The method includes: A network device generates CSI-RS configuration information, where the CSI-RS configuration information includes first indication information, and the first indication information is used to indicate a terminal to receive a first CSI-RS in first duration that is after a terminal enters an idle mode or an inactive mode. The network device sends the CSI-RS configuration information to the terminal.

Based on the foregoing technical solution, the network device configures the CSI-RS configuration information for the terminal, where the CSI-RS configuration information includes the first indication information. The first indication information is used to indicate the terminal to receive the first CSI-RS in the first duration that is after the terminal enters the idle mode or the inactive mode. In this way, when the terminal is in the idle mode or the inactive mode, the terminal may receive a CSI-RS in the first duration, so that the terminal in the idle mode or the inactive mode may perform beam training by using the CSI-RS. Power consumption generated when the terminal performs beam training by using the CSI-RS is less than power consumption generated when the terminal performs beam training by using an SSB. Therefore, the communication method provided in this application may reduce the power consumption of the terminal.

In a possible implementation, the network device continuously sends the first CSI-RS in the first duration. In this way, a problem that the terminal cannot normally receive the first CSI-RS in the first duration because the network device stops sending the first CSI-RS in the first duration may be avoided.

In a possible implementation, the first duration is duration in which a first timer is in an active mode, and the first timer is a timer that is activated after the network device determines that the terminal enters the idle mode or the inactive mode. In this way, the network device may accurately determine, through the first timer disposed in the network device, whether duration in which the terminal is in the idle mode or the inactive mode exceeds the first duration.

In a possible implementation, active time of the first timer is time at which the network device sends a radio resource control (radio resource control, RRC) release message. In this way, the network device may activate the first timer in a timely manner when the terminal is about to enter the idle mode or the inactive mode.

In a possible implementation, active time of the first timer is time at which the network device determines that an RRC release message is successfully sent. In this way, the network device may activate the first timer in a timely manner when the terminal enters the idle mode or the inactive mode.

In a possible implementation, when the first timer expires, the network device determines whether there is a terminal that is in a connected mode and that receives the first CSI-RS; and if there is no such terminal, the network device stops sending the first CSI-RS. In this way, when the first timer expires, if there is no terminal that is in the connected mode and that receives the first CSI-RS, the terminal may stop sending the first CSI-RS, to reduce signaling overheads of the network device.

According to a second aspect, this application provides a communication method. The method includes: A terminal receives CSI-RS configuration information from a network device, where the CSI-RS configuration information includes first indication information, and the first indication information is used to indicate the terminal to receive a first CSI-RS in first duration that is after the terminal enters an idle mode or an inactive mode. In response to the first indication information, the terminal receives the first CSI-RS in the first duration that is after the terminal enters the idle mode or the inactive mode.

Based on the foregoing technical solution, when the terminal is in the idle mode or the inactive mode, the terminal may receive a CSI-RS in the first duration, so that the terminal in the idle mode or the inactive mode may perform beam training by using the CSI-RS. Power consumption generated when the terminal performs beam training by using the CSI-RS is less than power consumption generated when the terminal performs beam training by using an SSB. Therefore, the communication method provided in this application may reduce the power consumption of the terminal.

In a possible implementation, the first duration is duration in which a second timer is in an active mode, and the second timer is a timer that is activated after the terminal enters the idle mode or the inactive mode. In this way, the terminal may accurately determine, through the second timer disposed in the terminal, whether duration in which the terminal is in the idle mode or the inactive mode exceeds the first duration.

In a possible implementation, active time of the second timer is time at which the network device sends an RRC release message. In this way, when the terminal is about to enter the idle mode or the inactive mode, the terminal may activate a first timer in a timely manner. In addition, it may be further ensured that the first timer and the second timer are synchronously activated, so that first duration determined by the first timer is consistent with the first duration determined by the second timer.

In a possible implementation, active time of the second timer is time at which the network device determines that an RRC release message is successfully sent. In this way, the terminal may activate the first timer in a timely manner when the terminal enters the idle mode or the inactive mode. In addition, it may be further ensured that the first timer and the second timer are synchronously activated, so that first duration determined by the first timer is consistent with the first duration determined by the second timer.

In a possible implementation, when the second timer expires, the terminal receives a synchronization signal block SSB sent by the network device. When the second timer expires, the network device may stop sending the first CSI-RS. Therefore, when the second timer expires, the terminal receives the SSB from the network device, so that it may be ensured that the terminal can normally perform beam training.

According to a third aspect, this application provides a communication method. The method includes: A network device generates system information, where the system information includes parameters of N CSI-RS resources, and N is an integer greater than 1. The network device broadcasts the system information.

In this way, when a terminal is in an idle mode or an inactive mode, the network device may send parameters of CSI-RS resources to the terminal by broadcasting the system information, so that the terminal can also perform beam training by using a CSI-RS in an idle mode or an inactive mode.

In a possible implementation, the N CSI-RS resources include one reference CSI-RS resource and N-1 offset CSI-RS resources, parameters of the N-1 offset CSI-RS resources are shown in a form of offsets, and an offset of a parameter of any one of the N-1 offset CSI-RS resources is determined based on a difference between the parameter of the resource and a configuration parameter of the reference CSI-RS resource.

In this way, the network device shows the parameter of the CSI-RS resource in the form of the offset, so that signaling overheads for sending the system information by the network device can be reduced.

In a possible implementation, the system information includes a first field, and the first field is used to indicate that there is an association relationship between a CSI-RS and an SSB. In this way, the network device may indicate, based on the first field, that there is the association relationship between a CSI-RS and an SSB.

In a possible implementation, the system information includes K second fields, and the K second fields are used to indicate an SSB associated with K CSI-RS resources, where one second field is used to indicate an SSB associated with a CSI-RS resource. In this way, the network device may indicate, based on the second field, the association relationship between a CSI-RS and an SSB. K is a positive integer.

According to a fourth aspect, this application provides a communication method. The method includes: A terminal receives system information from a network device, where the system information includes parameters of N CSI-RS resources, and N is an integer greater than 1. The terminal performs beam measurement based on the N CSI-RS resources in the system information.

Based on the foregoing technical solution, when the terminal is in an idle mode or an inactive mode, the terminal may perform beam measurement based on the N CSI-RS resources, thereby reducing power consumption of the terminal.

In a possible implementation, the terminal determines whether the system information includes a parameter of a resource of a target CSI-RS, where the target CSI-RS is a CSI-RS received by the terminal in a connected mode. If the system information does not include the parameter of the resource of the target CSI-RS, the terminal determines that sending of the target CSI-RS has been stopped.

In this way, after receiving the system information, the terminal may determine, depending on whether the system information includes the parameter of the resource of the target CSI-RS, whether there is the target CSI-RS. In this way, the network device does not need to notify the terminal that the target CSI-RS has been disabled. Signaling overheads of the network device can be further reduced.

In a possible implementation, if the system information includes the parameter of the resource of the target CSI-RS, the terminal determines that sending of the target CSI-RS is not stopped. In this way, the terminal may determine that the resource of the target CSI-RS is still being sent, and the terminal may perform beam measurement based on the CSI-RS resource.

In a possible implementation, the N CSI-RS resources include one reference CSI-RS resource and N-1 offset CSI-RS resources, parameters of the N-1 offset CSI-RS resources are shown in a form of offsets, and an offset of a parameter of any one of the N-1 offset CSI-RS resources is determined based on a difference between the parameter of the resource and a configuration parameter of the reference CSI-RS resource.

In a possible implementation, if the system information includes the parameter of the resource of the target CSI-RS, the terminal determines the parameter of the resource of the target CSI-RS. When the parameter of the resource of the target CSI-RS is the offset, the terminal determines the parameter of the reference CSI-RS resource in the parameters of the N CSI-RS resources. The terminal determines the parameter of the resource of the target CSI-RS based on the offset of the parameter of the resource of the target CSI-RS and the parameter of the reference CSI-RS resource.

In this way, the terminal may determine the parameter of the CSI-RS resource based on the offset of the parameter of the CSI-RS resource.

According to a fifth aspect, this application provides a network device, including a processing unit and a communication unit. The processing unit is configured to generate channel state information-reference signal CSI-RS configuration information, where the CSI-RS configuration information includes first indication information, and the first indication information is used to indicate a terminal to receive a first CSI-RS in first duration that is after the terminal enters an idle mode or an inactive mode. The communication unit is configured to send the CSI-RS configuration information to the terminal.

In a possible implementation, the communication unit is further configured to continuously send the first CSI-RS in the first duration.

In a possible implementation, the first duration is duration in which a first timer is in an active mode, and the first timer is a timer that is activated after the network device determines that the terminal enters the idle mode or the inactive mode.

In a possible implementation, active time of the first timer is time at which the network device sends an RRC release message.

In a possible implementation, active time of the first timer is time at which the network device determines that an RRC release message is successfully sent.

In a possible implementation, when the first timer expires, the processing unit is further configured to determine whether there is a terminal that is in a connected mode and that receives the first CSI-RS. If there is no such terminal, the communication unit is further configured to stop sending the first CSI-RS, where the processing unit may indicate the communication unit to stop sending the first CSI-RS.

According to a sixth aspect, this application provides a terminal, including a processing unit and a communication unit. The communication unit is configured to receive CSI-RS configuration information from a network device, where the CSI-RS configuration information includes first indication information, and the first indication information is used to indicate the terminal to receive a first CSI-RS in first duration that is after the terminal enters an idle mode or inactive mode. The processing unit is configured to receive, in response to the first indication information, the first CSI-RS through the communication unit in the first duration that is after the terminal enters the idle mode or the inactive mode.

In a possible implementation, the first duration is duration in which a second timer is in an active mode, and the second timer is a timer that is activated after the terminal enters the idle mode or the inactive mode.

In a possible implementation, active time of the second timer is time at which the network device sends an RRC release message.

In a possible implementation, active time of the second timer is time at which the network device determines that an RRC release message is successfully sent.

In a possible implementation, when the second timer expires, the communication unit is further configured to receive a synchronization signal block SSB sent by the network device.

According to a seventh aspect, this application provides a network device, including a processing unit and a communication unit. The processing unit is configured to generate system information, where the system information includes parameters of N CSI-RS resources, and N is an integer greater than 1. The communication unit is configured to broadcast the system information.

In a possible implementation, the N CSI-RS resources include one reference CSI-RS resource and N-1 offset CSI-RS resources, parameters of the N-1 offset CSI-RS resources are shown in a form of offsets, and an offset of a parameter of any one of the N-1 offset CSI-RS resources is determined based on a difference between the parameter of the resource and a configuration parameter of the reference CSI-RS resource.

In a possible implementation, the system information includes a first field, and the first field is used to indicate that there is an association relationship between a CSI-RS and an SSB.

In a possible implementation, the system information includes K second fields, and the K second fields are used to indicate an SSB associated with K CSI-RS resources, where one second field is used to indicate an SSB associated with a CSI-RS resource. K is a positive integer.

According to an eighth aspect, this application provides a terminal, including a processing unit and a communication unit. The communication unit is configured to receive system information from a network device, where the system information includes parameters of N CSI-RS resources, and N is an integer greater than 1. The processing unit is configured to perform beam measurement based on the N CSI-RS resources in the system information.

In a possible implementation, the processing unit is further configured to determine whether the system information includes a parameter of a resource of a target CSI-RS, where the target CSI-RS is a CSI-RS received by the terminal in a connected mode. If the system information does not include the parameter of the resource of the target CSI-RS, the processing unit is further configured to determine that sending of the target CSI-RS has been stopped.

In a possible implementation, if the system information includes the parameter of the resource of the target CSI-RS, the processing unit is further configured to determine that sending of the target CSI-RS is not stopped.

In a possible implementation, the N CSI-RS resources include one reference CSI-RS resource and N-1 offset CSI-RS resources, parameters of the N-1 offset CSI-RS resources are shown in a form of offsets, and an offset of a parameter of any one of the N-1 offset CSI-RS resources is determined based on a difference between the parameter of the resource and a configuration parameter of the reference CSI-RS resource.

In a possible implementation, if the system information includes the parameter of the resource of the target CSI-RS, the processing unit is further configured to: determine the parameter of the resource of the target CSI-RS; when the parameter of the resource of the target CSI-RS is the offset, determine the parameter of the reference CSI-RS resource in the parameters of the N CSI-RS resources; and determine the parameter of the resource of the target CSI-RS based on the offset of the parameter of the resource of the target CSI-RS and the parameter of the reference CSI-RS resource.

According to a ninth aspect, this application provides a network device, including a processor and a communication interface, where the communication interface is coupled to the processor, and the processor is configured to run a computer program or instructions to implement the communication method according to the first aspect or any one of the possible implementations of the first aspect.

According to a tenth aspect, this application provides a terminal, including a processor and a communication interface, where the communication interface is coupled to the processor, and the processor is configured to run a computer program or instructions to implement the communication method according to the second aspect or any one of the possible implementations of the second aspect.

According to an eleventh aspect, this application provides a network device, including a processor and a communication interface, where the communication interface is coupled to the processor, and the processor is configured to run a computer program or instructions to implement the communication method according to the third aspect or any one of the possible implementations of the third aspect.

According to a twelfth aspect, this application provides a terminal, including a processor and a communication interface, where the communication interface is coupled to the processor, and the processor is configured to run a computer program or instructions to implement the communication method according to the fourth aspect or any one of the possible implementations of the fourth aspect.

According to a thirteenth aspect, this application provides a computer-readable storage medium, where the computer-readable storage medium stores instructions; and when the instructions are run on a network device, the network device is enabled to perform the communication method according to the first aspect or any one of the possible implementations of the first aspect.

According to a fourteenth aspect, this application provides a computer-readable storage medium, where the computer-readable storage medium stores instructions; and when the instructions are run on a terminal, the terminal is enabled to perform the communication method according to the second aspect or any one of the possible implementations of the second aspect.

According to a fifteenth aspect, this application provides a computer-readable storage medium, where the computer-readable storage medium stores instructions; and when the instructions are run on a network device, the network device is enabled to perform the method according to the third aspect or any one of the possible implementations of the third aspect.

According to a sixteenth aspect, this application provides a computer-readable storage medium, where the computer-readable storage medium stores instructions; and when the instructions are run on a terminal, the terminal is enabled to perform the method according to the fourth aspect or any one of the possible implementations of the fourth aspect.

According to a seventeenth aspect, this application provides a computer program product, where the computer program product includes instructions; and when the computer program product is run on a network device, the network device is enabled to perform the communication method according to the first aspect or any one of the possible implementations of the first aspect.

According to an eighteenth aspect, this application provides a computer program product, where the computer program product includes instructions; and when the computer program product is run on a terminal, the terminal is enabled to perform the communication method according to the second aspect or any one of the possible implementations of the second aspect.

According to a nineteenth aspect, this application provides a computer program product, where the computer program product includes instructions; and when the computer program product is run on a network device, the network device is enabled to perform the communication method according to the third aspect or any one of the possible implementations of the third aspect.

According to a twentieth aspect, this application provides a computer program product, where the computer program product includes instructions; and when the computer program product is run on a terminal, the terminal is enabled to perform the communication method according to the fourth aspect or any one of the possible implementations of the fourth aspect.

According to a twenty-first aspect, this application provides a chip, including a processor and an interface, where the processor is coupled to a memory over the interface; and when the processor executes a computer program or instructions in the memory, the communication method according to the first aspect or any one of the possible implementations of the first aspect is performed.

According to a twenty-second aspect, this application provides a chip, including a processor and an interface, where the processor is coupled to a memory over the interface; and when the processor executes a computer program or instructions in the memory, the communication method according to the second aspect or any one of the possible implementations of the second aspect is performed.

According to a twenty-third aspect, this application provides a chip, including a processor and an interface, where the processor is coupled to a memory over the interface; and when the processor executes a computer program or instructions in the memory, the communication method according to the third aspect or any one of the possible implementations of the third aspect is performed.

According to a twenty-fourth aspect, this application provides a chip, including a processor and an interface, where the processor is coupled to a memory over the interface; and when the processor executes a computer program or instructions in the memory, the communication method according to the fourth aspect or any one of the possible implementations of the fourth aspect is performed.

According to a twenty-fifth aspect, this application provides a communication system, including a network device and a terminal that communicates with the network device. The network device is configured to perform the communication method according to the first aspect or any one of the possible implementations of the first aspect, and the terminal is configured to perform the communication method according to the second aspect or any one of the possible implementations of the second aspect. Alternatively, the network device is configured to perform the communication method according to the third aspect or any one of the possible implementations of the third aspect, and the terminal is configured to perform the communication method according to the fourth aspect or any one of the possible implementations of the fourth aspect.

It should be understood that, descriptions of technical features, technical solutions, beneficial effects, or similar words in this application do not imply that all features and advantages can be implemented in any individual embodiment. On the contrary, it may be understood that, descriptions of the features or the beneficial effects mean that at least one embodiment includes a specific technical feature, technical solution, or beneficial effect. Therefore, the descriptions of the technical features, the technical solutions, or the beneficial effects in this specification may not necessarily belong to one embodiment. Further, the technical features, the technical solutions, and the beneficial effects described in embodiments may be combined in any proper manner. A person skilled in the art may understand that an embodiment may be implemented without one or more specific technical features, technical solutions, or beneficial effects in a specific embodiment. In other embodiments, additional technical features and beneficial effects may be further identified in a specific embodiment that does not reflect all embodiments.

### BRIEF DESCRIPTION OF DRAWINGS

FIG. 1 is a system diagram of an architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic diagram of a structure of a communication apparatus according to an embodiment of this application;
FIG. 8 is a schematic diagram of a hardware structure of a communication apparatus according to an embodiment of this application;
FIG. 9 is another schematic diagram of a hardware structure of a communication apparatus according to an embodiment of this application;
FIG. 10 is a schematic diagram of a hardware structure of a terminal according to an embodiment of this application; and
FIG. 11 is a schematic diagram of a hardware structure of a network device according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, words such as "example" or "for example" are used to represent giving an example, an illustration, or a description. Any embodiment or design scheme described as "example" or "for example" in this application should not be explained as being more preferred or having more advantages than another embodiment or design solution. Exactly, use of the word such as "example" or "for example" is intended to present a related concept in a specific manner.

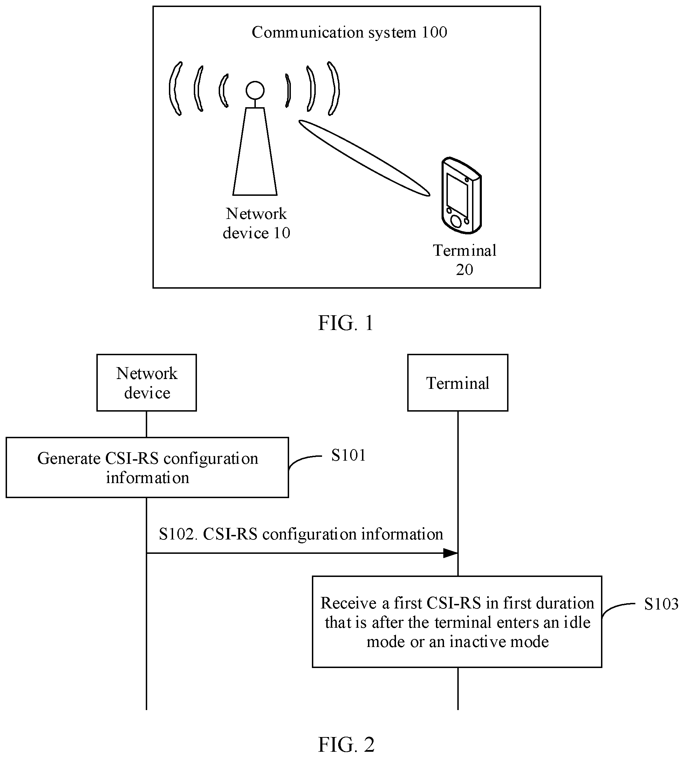

This application may be applied to a communication system 100 shown in FIG. 1. The communication system 100 includes a network device 10 and a terminal 20. The network device 10 communicates with the terminal 20 through a radio link.

The network device 10 may be a multiple beam base station, or may be a single beam base station. The terminal 20 may be a fixed terminal, or may be a non-fixed terminal (namely, a mobile handheld terminal).

A communication system in embodiments of this application includes but is not limited to a long term evolution (long term evolution, LTE) system, a 5th generation (5th generation, 5G) system, a new radio (new radio, NR) system, a wireless local area network (wireless local area network, WLAN) system and a future evolved system, or a plurality of communication convergence systems. For example, a method provided in embodiments of this application may be specifically applied to an evolved universal terrestrial radio access network (evolved universal terrestrial radio access network, E-UTRAN) system and a next generation radio access network (next generation radio access network, NG-RAN) system.

A network device in embodiments of this application is an entity that is on a network side and that is configured to send a signal, receive a signal, or send a signal and receive a signal. The network device may be an apparatus that is deployed in a radio access network (radio access network, RAN) to provide a wireless communication function for a terminal, for example, a transmission reception point (transmission reception point, TRP), a base station (for example, an evolved NodeB (evolved NodeB, eNB or eNodeB), a next-generation base station node (next generation node base station, gNB), or a next-generation eNB (next-generation eNB, ng-eNB)), a control node in various forms (for example, a network controller, a radio controller (for example, a radio controller in a cloud radio access network (cloud radio access network, CRAN) scenario)), a road side unit (road side unit, RSU), or the like. Specifically, the network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminals within coverage of the plurality of base stations. In systems using different radio access technologies (radio access technologies, RATs), names of devices having a base station function may be different. For example, the base station may be referred to as an eNB or an eNodeB in an LTE system, and may be referred to as a gNB in a 5G system or an NR system. A specific name of the base station is not limited in this application. The network device may alternatively be a network device in a future evolved public land mobile network (public land mobile network, PLMN) or the like.

A terminal in embodiments of this application is an entity that is on a user side and that is configured to receive a signal, send a signal, or receive a signal and send a signal. The terminal is configured to provide a user with one or more of a voice service and a data connectivity service. Alternatively, the terminal may be referred to as user equipment (user equipment, UE), a terminal device, an access terminal, a subscriber unit, a subscriber station, a mobile station, a remote station, a remote terminal, a mobile device, a user terminal, a wireless communication device, a user agent, or a user apparatus. The terminal may be a vehicle-to-everything (vehicle-to-everything, V2X) device, for example, a smart car (smart car or intelligent car), a digital car (digital car), an unmanned car (unmanned car, driverless car, pilotless car, or automobile), a self-driving car (self-driving car or autonomous car), a pure EV (pure EV or Battery EV), a hybrid electric vehicle (hybrid electric vehicle, HEV), a range extended EV (range extended EV, REEV), a plug-in HEV (plug-in HEV, PHEV), or a new energy vehicle (new energy vehicle). Alternatively, the terminal may be a device-to-device (device-to-device, D2D) device, for example, an electricity meter or a water meter. Alternatively, the terminal may be a mobile station (mobile station, MS), a subscriber unit (subscriber unit), an unmanned aerial vehicle, an Internet of Things (Internet of Things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, or a wearable device (which may also be referred to as a wearable intelligent device). Alternatively, the terminal may be a terminal in a next-generation communication system, for example, a terminal in a 5G system, a terminal in a future evolved PLMN, or a terminal in an NR system.

To make this application clearer, some concepts in this application are first briefly described.

### 1. Idle (idle) mode

The idle mode is a mode in which a terminal completes camping in a cell but does not perform a random access process. The terminal usually enters the idle mode after being powered on or after an RRC release is performed.

### 2. Connected (connected) mode

The connected mode is a mode in which a terminal completes a random access process but does not perform an RRC release. The terminal in the connected mode may perform data transmission with the network device.

When the terminal is in an idle mode, after the terminal completes the random access process, the terminal switches to the connected mode. When the terminal is in the connected mode, after the terminal performs the RRC release, the terminal switch to an idle mode.

### 3. Inactive mode

The inactive mode is a mode between a connected mode and an idle mode.

For a terminal in the inactive mode, user plane bearer of an air interface is suspended (suspend), and a user plane bearer and a control plane bearer between a radio access network (radio access network, RAN) and a core network (core network, CN) are still maintained. When the terminal initiates a call or a service request, the user plane bearer of the air interface needs to be activated, and the existing user plane bearer and control plane bearer between the RAN and the CN are reused.

### 4. CSI-RS

The CSI-RS is used to evaluate beam quality. A beam may correspond to a CSI-RS resource. Therefore, a terminal may determine quality of the CSI-RS resource by measuring and evaluating the CSI-RS resource. The terminal reports, to a network device, the quality of the CSI-RS resource that is obtained through measurement and evaluation, so that the network device can determine the beam quality based on the quality of the CSI-RS resource and the correspondence between the beam and the CSI-RS resource.

To determine the beam quality, the network device needs to send measurement configuration information to the terminal. The measurement configuration information mainly includes two parts: resource configuration information and report configuration information.

The resource configuration information is information related to a resource to be measured, and is configured by using a three-level structure (resourceConfig resourceConfig-resourceSet resourceSet-resource resource) in the protocol. The network device may configure one or more resource configurations for the terminal. Each resource configuration includes one or more resource sets, and each resource set may include one or more resources. Each resourceConfig/resourceSet/resource includes an index of the resourceConfig/resourceSet/resource. In addition, some other parameters are further included, for example, a resource periodicity and a signal class corresponding to the resource.

### 5. Discontinuous reception (discontinuous reception, DRX) mode

The DRX mode is a mode for a terminal to receive a signal, and is used to reduce power consumption of the terminal. The terminal may determine, based on a configuration of a network device, whether to receive the signal in the DRX mode. In a conventional technology, when a terminal receives a signal in the DRX mode, in a DRX cycle, the terminal may receive a CSI-RS and perform CSI measurement in active time (active time); in time other than the active time, the terminal enters sleep time, and in the sleep time, the terminal neither receives the CSI-RS nor performs CSI measurement.

### 6. Beam

The beam in an NR protocol may be embodied as a spatial domain filter (spatial domain filter) that is also referred to as a spatial filter (spatial filter) or a spatial parameter (spatial parameter). A beam used to transmit a signal may be referred to as a transmit beam (transmit beam, Tx beam), or may be referred to as a spatial domain transmission filter (spatial domain transmission filter) or a spatial transmission parameter (spatial transmission parameter). A beam used to receive a signal may be referred to as a receive beam (receive beam, Rx beam), or may be referred to as a spatial domain receive filter (spatial domain receive filter) or a spatial reception parameter (spatial RX parameter).

The transmit beam may refer to distribution of signal strength formed in different directions in space after a signal is transmitted through an antenna, and the receive beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like

A beam usually corresponds to a resource (for example, a CSI-RS resource). For example, when beam measurement is performed, a network device measures different beams by using different resources, and a terminal feeds back quality of the resources obtained through measurement, so that the network device knows quality of corresponding beams. During data transmission, information about a beam is also indicated by using a resource corresponding to the beam. For example, the network device indicates information about a physical downlink shared channel (physical downlink shared channel, PDSCH) beam of the terminal by using a transmission configuration indicator (transmission configuration indicator, TCI) resource of downlink control information (downlink control information, DCI).

Optionally, a plurality of beams that have a same or similar communication feature may be considered as one beam. One beam may include one or more antenna ports, configured to transmit a data channel, a control channel, a sounding signal, and the like. The one or more antenna ports forming the beam may also be considered as one antenna port set.

### 7. Quasi co-located (quasi co-located, QCL) relationship

In this application, the QCL relationship may also be referred to as mapping, corresponding, and relating. When there is a QCL relationship between two signals, at least one of a same delay spread, a same Doppler spread, a same average gain, a same average delay, and a same spatial domain parameter may be selected to send or receive a signal, and a same beam may be selected to send or receive a signal.

A QCL relationship parameter includes at least one of a Doppler spread, a Doppler frequency shift, an average delay, a delay spread, and a spatial domain reception parameter. Based on the foregoing parameter, QCL relationships may be categorized into four types.
QCL-TypeA: {Doppler frequency shift, Doppler spread, average delay, delay spread}.
QCL-TypeB: {Doppler frequency shift, Doppler spread}.
QCL-TypeC: {Doppler frequency shift, average delay}.
QCL-TypeD: {spatial domain reception parameter}.

The QCL relationship parameter may be randomly selected. For example, the selected QCL relationship parameter is QCL-TypeD. In addition, the same average gain is used to transmit or receive a signal.

In an implementation of embodiments of this application, when a reference signal configured by a network device for a terminal is an SSB, the terminal needs to first perform beam training before receiving a paging message (paging message) sent by the network device. An example in which a network device has 64 beams and a terminal has 8 beams is used below for description.

For the 8 beams of the terminal, the terminal needs to perform 8 rounds of beam training. In each round of beam training, the network device needs to sequentially use the 64 beams to scan one fixed beam of the terminal. Duration of each round of beam training is one SSB periodicity. After 8 rounds of beam training are performed, the terminal determines a beam pair with best beam quality. The terminal receives the paging message of the network device by using the beam pair with the best beam quality.

The duration of each round of beam training is one SSB periodicity, where the SSB periodicity is 20 ms. In this case, for a terminal having 8 beams, 160 ms is required to complete a beam training process. Consequently, the terminal needs long time to perform beam training, and high power consumption is generated in the beam training process of the terminal.

In another implementation of embodiments of this application, when a reference signal configured by a network device for a terminal is a CSI-RS, the terminal also needs to first perform beam training before receiving a paging message sent by the network device. An example in which a terminal has 8 beams is used below for description.

When the terminal performs beam training by using the CSI-RS resource, because the terminal has 8 beams, the terminal may measure 64 CSI-RS resources by using each beam, and duration in which each beam may be used to measure 64 CSI-RS resources is one CSI-RS resource periodicity. In this way, the 8 beams of the terminal need 8 CSI-RS resource periodicities for measurement. The CSI-RS resource periodicity is usually 5 ms. In this way, when the terminal performs beam training by using the CSI-RS resource, it takes 40 ms to complete the beam training.

On this basis, duration in which the terminal performs beam training by using the CSI-RS resource is less than duration in which the terminal performs beam training by using the SSB, so that power consumption generated when the terminal performs beam training by using the CSI-RS resource is less than power consumption generated when the terminal performs beam training by using the SSB.

To resolve the foregoing technical problem, embodiments of this application provide a communication method. The terminal may receive the CSI-RS in first duration when the terminal enters an idle mode or an inactive mode. In this way, when the terminal enters the idle mode or the inactive mode, beam training may be performed by using the CSI-RS. Power consumption generated when the terminal performs beam training by using the CSI-RS is less than power consumption generated when the terminal performs beam training by using the SSB. Therefore, the communication method provided in embodiments of this application may reduce the power consumption of the terminal.

Embodiments of this application provide a communication method. As shown in FIG. 2, the method includes the following steps.

S101. A network device generates CSI-RS configuration information.

The CSI-RS configuration information includes first indication information, where the first indication information is used to indicate a terminal to receive a first CSI-RS in first duration that is after the terminal enters an idle mode or an inactive mode.

Optionally, the terminal is a terminal that is in a connected mode and that receives the first CSI-RS. There may be a plurality of terminals that are in the connected mode and that receive the first CSI-RS, and the terminal is one of the plurality of terminals.

It should be noted that, the first indication information may be configured in a CSI-RS resource of the CSI-RS configuration information, or may be configured in a CSI-RS resource set of the CSI-RS configuration information.

In an implementation, the first duration may be preset duration; the first duration may be predefined duration; the first duration is duration specified in a protocol; or the first duration is duration determined through negotiation between the network device and the terminal. In this case, the terminal can determine the first duration without an indication of the network device.

In another implementation, the first duration is indicated by the network device to the terminal. In this case, the first duration may be duration preset in the first indication information.

For example, a value of the first duration may be any value from 1 to 10. A time unit of the first duration may be any one of a slot, a subframe, a frame, a millisecond (ms), a second (s), a minute, an hour, a day, 1024 frames, a DRX cycle, or a system information modification periodicity.

In a possible implementation of S101, the CSI-RS configuration information generated by the network device may include a plurality of CSI-RSs, and the first CSI-RS is one of the plurality of CSI-RSs.

For example, the CSI-RS configuration information generated by the network device further includes a second CSI-RS. In this case, the CSI-RS configuration information generated by the network device further includes second indication information, where the second indication information is used to indicate the terminal to receive the second CSI-RS in second duration that is after the terminal enters the idle mode or the inactive mode. The terminal indicated by the second indication information is a terminal that is currently in the connected mode and that receives the second CSI-RS. Different terminals may receive different CSI-RSs.

It may be understood that, when the CSI-RS configuration information generated by the network device includes a plurality of CSI-RSs, the CSI-RS configuration information generated by the network device may further include indication information corresponding to each CSI-RS. A function of the indication information corresponding to each CSI-RS is similar to a function of the first indication information and a function of the second indication information, and details are not described herein again.

S102. The network device sends the CSI-RS configuration information to the terminal. Correspondingly, the terminal receives the CSI-RS configuration information from the network device.

In a possible implementation, the network device sends the CSI-RS configuration information to the terminal by using UE-specific (UE-specific) signaling.

It should be noted that, when the network device sends the CSI-RS configuration information to the terminal by using the UE-specific signaling, the CSI-RS configuration information may be carried in any one of a media access control control element (media access control control element, MAC CE), DCI, and radio resource control (radio resource control, RRC) signaling.

In another possible implementation, the network device sends the CSI-RS configuration information to the terminal in a broadcast manner.

It should be noted that, when the network device sends the CSI-RS configuration information to the terminal in the broadcast manner, the CSI-RS configuration information may be carried on any one of a physical broadcast channel (physical broadcast channel, PBCH), remaining minimum system information (remaining minimum system information, RMSI), a system information block (system information block, SIB) 1, an SIB2, an SIB3, and system information.

S103. In response to the first indication information, the terminal receives the first CSI-RS in the first duration that is after the terminal enters the idle mode or the inactive mode.

Based on the foregoing technical solution, the network device configures the CSI-RS configuration information for the terminal, where the CSI-RS configuration information includes the first indication information. The first indication information is used to indicate the terminal to receive the first CSI-RS in the first duration that is after the terminal enters the idle mode or the inactive mode. In this way, when the terminal is in the idle mode or the inactive mode, the terminal may receive a CSI-RS in the first duration. Therefore, when the terminal enters the idle mode or the inactive mode, beam training may be performed by using the CSI-RS. Power consumption generated when the terminal performs beam training by using the CSI-RS is less than power consumption generated when the terminal performs beam training by using an SSB. Therefore, the communication method provided in embodiments of this application may reduce the power consumption of the terminal.

In a possible implementation, the first duration is duration in which a first timer and a second timer are in an active mode. The first timer is a timer disposed in the network device and is a timer that is activated after the network device determines that the terminal enters the idle mode or the inactive mode. The second timer is a timer disposed in the terminal and is a timer that is activated after the terminal enters the idle mode or the inactive mode.

In embodiments of this application, the first timer and the second timer are enabled synchronously, duration in which the first timer is in the active mode is the same as duration in which the second timer is in the active mode, and both are the first duration.

In a case, active time of the first timer is time at which the network device sends an RRC release message. In this case, active time of the second timer is also the time at which the network device sends the RRC release message.

It should be noted that, the second timer is the timer disposed in the terminal, and it is difficult for the terminal to determine, in real time, the time at which the network device sends the RRC release message. Therefore, in embodiments of this application, the active time of the second timer may be determined as time at which the terminal receives the RRC release message from the network device. A difference between the time at which the network device sends the RRC release message and the time at which the terminal receives the RRC release message from the network device is usually very small. Therefore, it may be approximately considered that the first timer and the second timer are simultaneously activated.

In another case, the active time of the first timer is time at which network device determines that an RRC release message is successfully sent. In this case, active time of the second timer is also the time at which the network device determines that the RRC release message is successfully sent.

It should be noted that, the second timer is the timer disposed in the terminal, and it is difficult for the terminal to determine, in real time, the time at which the network device sends the RRC release message. Therefore, in embodiments of this application, the active time of the second timer may be determined as time at which the terminal sends indication information that the RRC release message is successfully received to the network device. A difference between the time at which the terminal sends the indication information that the RRC release message is successfully received to the network device and the time at which the network device successfully sends the RRC release message is usually very small. Therefore, it may be approximately considered that the first timer and the second timer are simultaneously activated.

It should be noted that, after the network device sends the RRC release message to the terminal and the terminal successfully receives the RRC release message, the terminal sends the indication information (for example, an acknowledgment (acknowledgment, ACK)) that the RRC release message is successfully received to the network device. After the network device receives the indication information that the RRC release message is successfully received, the network device determines that the RRC release message is successfully sent.

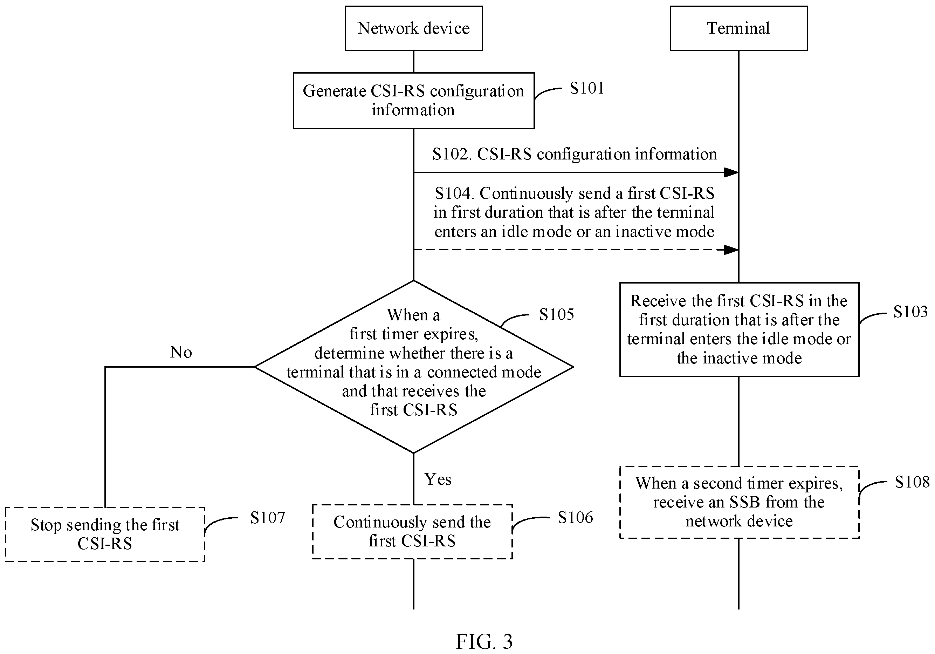

Based on the technical solution shown in FIG. 2, as shown in FIG. 3, after S102, the communication method provided in embodiments of this application further includes the following steps.

S104. The network device continuously sends the first CSI-RS in the first duration that is after the terminal enters the idle mode or the inactive mode.

Optionally, the network device sends the first CSI-RS to the terminal in the broadcast manner.

It should be noted that, the terminal is already in the idle mode or the inactive mode in the first duration, and the network device cannot detect the terminal in this case. Consequently, the network device cannot interact with the terminal by using the UE-specific signaling. In this case, the network device sends the first CSI-RS in the broadcast manner, to ensure that when the terminal is within coverage of the network device, the terminal can normally receive the first CSI-RS broadcast by the network device.

It may be understood that, the network device may simultaneously send the plurality of CSI-RSs in the broadcast manner, and each terminal receives a CSI-RS corresponding to the terminal.

Based on the foregoing technical solution, when the first timer and the second timer are in the active mode, the network device continuously sends the first CSI-RS, so that even if the terminal enters the idle mode or the inactive mode, the terminal can still normally receive the first CSI-RS. This avoids a problem that the terminal cannot receive the CSI-RS because the network device does not send the first CSI-RS after the terminal enters the idle mode or the inactive mode.

As shown in FIG. 3, after S103, the communication method provided in embodiments of this application further includes the following steps.

S105. When the first timer expires (to be specific, when duration in which the terminal is in the idle mode or the inactive mode exceeds the first duration), the network device determines whether there is the terminal that is in the connected mode and that receives the first CSI-RS.

Whether the duration in which the terminal is in the idle mode or the inactive mode exceeds the first duration may be determined depending on whether the second timer in the terminal expires. This is specifically described below.

When the second timer expires, the terminal determines that the duration in which the terminal is in the idle mode or the inactive mode exceeds the first duration.

When the second timer does not expire, the terminal determines that the duration in which the terminal is in the idle mode or the inactive mode does not exceed the first duration.

Whether there is the terminal that is in the connected mode and that receives the first CSI-RS affects subsequent steps performed by the network device. This is described as below.
I. When there is the terminal that is in the connected mode and that receives the first CSI-RS, the network device performs the following S106.

S106. The network device continuously sends the first CSI-RS.

It may be understood that, when there is the terminal that is in the connected mode and that receives the first CSI-RS, the network device needs to continuously send the first CSI-RS, to ensure that the terminal that is in the connected mode and that receives the first CSI-RS can normally receive the first CSI-RS.

II. When there is no terminal that is in the connected mode and that receives the first CSI-RS, the network device performs the following S107.

S107. The network device stops sending the first CSI-RS.

It should be noted that, when there is no terminal that is in the connected mode and that receives the first CSI-RS, even if the network device continues sending the first CSI-RS, no terminal continues receiving the first CSI-RS. In this case, that the network device continues sending the first CSI-RS causes high signaling overheads of the network device. Therefore, to reduce signaling overheads of the network device, when there is no terminal that is in the connected mode and that receives the first CSI-RS, the network device may stop sending the first CSI-RS, to reduce signaling overheads.

Based on the foregoing technical solution, the network device activates the first timer when the terminal is in the connected mode, and continuously sends the first CSI-RS within the duration in which the first timer is in the active mode. This can ensure that the terminal can still normally receive the first CSI-RS in the idle mode or the inactive mode. Further, after the first timer expires, the network device determines whether there is the terminal that is in the connected mode and that receives the first CSI-RS. If there is such a terminal, the network device continuously sends the first CSI-RS, to ensure that the terminal can normally receive the first CSI-RS. If there is no such terminal, the network device stops sending the first CSI-RS, to reduce signaling overheads.

As shown in FIG. 3, after S103, the communication method provided in embodiments of this application further includes the following steps.

S108. When the second timer expires (to be specific, when duration in which the terminal is in the idle mode or the inactive mode exceeds the first duration), the terminal receives the SSB from the network device.

In a possible implementation, when the duration in which the terminal is in the idle mode or the inactive mode exceeds the first duration, regardless of whether the network device stops sending the first CSI-RS in this case, the terminal considers by default that the network device has stopped sending the first CSI-RS. Then, the terminal in the idle mode or the inactive mode no longer receives the first CSI-RS sent by the network device. To enable beam training to be normally performed between the network device and the terminal, the terminal receives the SSB from the network device, and the terminal subsequently performs beam training by using the SSB.

Based on the technical solution shown in FIG. 2, before step S101, the network device may select, according to some rules or based on some conditions, a manner for the terminal to learn whether sending of the CSI-RS is stopped, so that the terminal may determine, depending on whether sending of the CSI-RS is stopped, whether to perform beam training by using the CSI-RS or the SSB. It may be understood that, if sending of the CSI-RS is stopped, the terminal performs beam training by using the SSB; or if sending of the CSI-RS is not stopped, the terminal performs beam training by using the CSI-RS. These are separately described as below in a scenario 1 (in which the terminal is in the connected mode) and a scenario 2 (in which the terminal is in the idle mode).

### Scenario 1: The terminal in the connected mode

In scenario 1, the network device may indicate, by using a paging message or the foregoing second timer, the terminal whether sending of the CSI-RS is stopped. This is specifically described below.

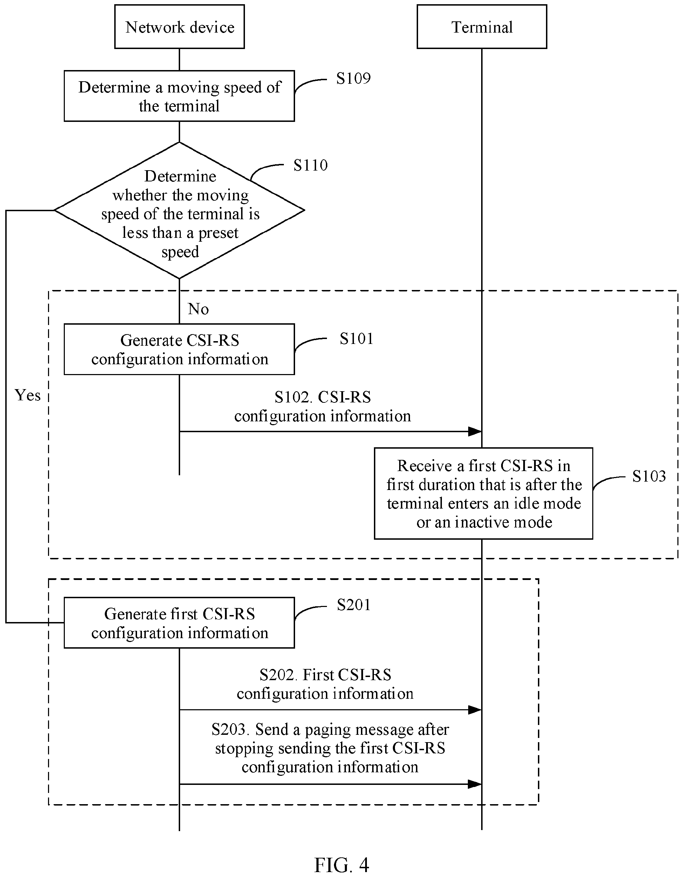

In scenario 1, as shown in FIG. 4, before step S101, the method further includes S109 and step S110.

S109. The network device determines a moving speed of the terminal.

In a possible implementation, the network device obtains location information of the terminal at different time points. The network device determines a moving distance of the terminal based on the location information of the terminal, and determines a moving time period of the terminal based on a time difference between the time points. Further, the network device determines the moving speed of the terminal based on the moving distance of the terminal and the moving time period of the terminal.

In another possible implementation, the terminal obtains location information of the terminal at different time points. The terminal determines a moving distance of the terminal based on the location information of the terminal, and determines a moving time period of the terminal based on a time difference between the time points. Further, the terminal determines the moving speed of the terminal based on the moving distance of the terminal and the moving time period of the terminal. The terminal reports the moving speed of the terminal to the network device. After receiving the moving speed reported by the terminal, the network device determines the moving speed as the moving speed of the terminal.

S110. The network device determines whether the moving speed of the terminal is less than a preset speed.

A value of the preset speed may be a preset value, or a value of the preset speed may be a predefined value.

Whether the moving speed of the terminal is greater than or equal to the preset speed affects subsequent steps performed by the network device. This is described as below.
I. When the moving speed of the terminal is less than the preset speed, the network device may indicate, by using the paging message, the terminal that sending of the CSI-RS is stopped. Specifically, this may be implemented by performing S201 to S203.

S201. The network device generates first CSI-RS configuration information. The first CSI-RS configuration information does not include the first indication information.

S202. The network device sends the first CSI-RS configuration information to the terminal. Correspondingly, the terminal receives the first CSI-RS configuration information from the network device.

S203: After the network device stops sending the first CSI-RS configuration information, the network device notifies, based on the paging message, the terminal that sending of the first CSI-RS has been stopped.

In embodiments of this application, that the network device stops sending the first CSI-RS is equivalent to that the network device has disabled the first CSI-RS.

It should be noted that, when the moving speed of the terminal is less than the preset speed, there is a low probability that the terminal leaves the coverage of the network device. In this case, the network device may notify, based on the paging message, the terminal that sending of the first CSI-RS has been stopped. Therefore, when generating the CSI-RS configuration information, the network device may not configure the first indication information in the CSI-RS configuration information. After the network device stops sending the first CSI-RS, the network device may notify, based on the paging message, the terminal that sending of the first CSI-RS has been stopped.

II. When the moving speed of the terminal is greater than or equal to the preset speed, the network device may indicate, through the second timer, the terminal whether sending of the CSI-RS is stopped. Specifically, this may be implemented by performing one or more steps of S101 to S108.

It should be noted that, when the moving speed of the terminal is greater than or equal to the preset speed, it indicates that the terminal is in a fast-moving mode. In this mode, the terminal is very likely to move out of the coverage of the network device. When the terminal moves out of the coverage of the network device, it is difficult for the terminal to notify, based on the paging message (for example, a paging message), the terminal that sending of the first CSI-RS has been stopped. In this case, the terminal may indicate, by configuring the first indication information in the CSI-RS configuration information, the terminal that sending of the first CSI-RS has been stopped. This avoids a problem that the network device cannot notify the terminal that sending of the first CSI-RS has been stopped.

In a possible implementation, the network device determines a location of the terminal, a moving track of the terminal, and the moving speed of the terminal. The network device determines, based on the location of the terminal, the moving track of the terminal, and the moving speed of the terminal, duration in which the terminal leaves the coverage of the network device. When the duration is greater than or equal to preset duration, the network device may indicate, through the second timer, the terminal whether sending of the CSI-RS is stopped. Specifically, this may be implemented by performing one or more steps of S101 to S108. When the duration is less than or equal to preset duration, the network device performs S201 to S203. In this way, the network device can select a more appropriate manner to indicate the terminal that sending of the first CSI-RS is stopped.

### Scenario 2: The terminal in the idle mode

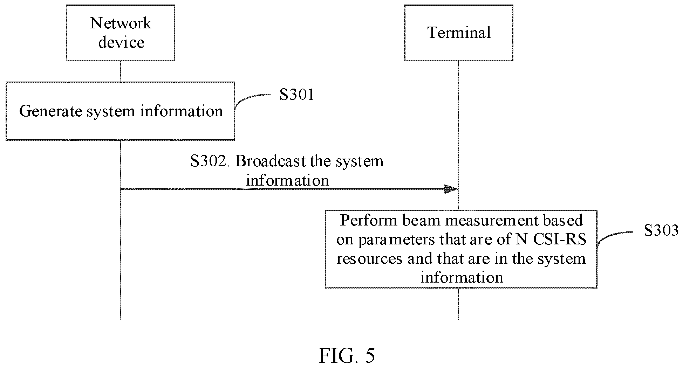

In scenario 2, the network device may indicate, by using system information, the terminal whether sending of the CSI-RS is stopped. As shown in FIG. 5, the following steps are included.

S301. The network device generates the system information.

The system information includes parameters of N CSI-RS resources, and N is an integer greater than 1.

The parameter of the CSI-RS resource specifically includes: a CSI-RS bandwidth, a CSI-RS frequency resource start location, a CSI-RS port value, a value of a CSI-RS resource time periodicity, a CSI-RS resource time start location, a symbol start location, and a slot start location.

The N CSI-RS resources include one reference CSI-RS resource and N-1 offset CSI-RS resources, and parameters of the N-1 offset CSI-RS resources are shown in a form of offsets. An offset of a parameter of any one of the N-1 offset CSI-RS resources is determined based on a difference between the parameter of the resource and a configuration parameter of the reference CSI-RS resource.

In a possible implementation, a process in which the network device determines the parameters of the N CSI-RS resources is specifically as follows.
1. The network device selects an M^{th} CSI-RS resource in the N CSI-RS resources as the reference CSI-RS resource, where M is a positive integer greater than 0 and less than or equal to N.
2. The network device determines a parameter of the M^{th} CSI-RS resource.
3. The network device determines a parameter of an L^{th} CSI-RS resource, where the L^{th} CSI-RS resource is any one of the N CSI-RS resources except the M^{th} CSI-RS resource.
4. The network device determines an offset of the parameter of the L^{th} CSI-RS resource relative to the parameter of the M^{th} CSI-RS resource, where the offset is a difference between the configuration parameters.
5. The network device uses the offset of the parameter of the L^{th} CSI-RS resource relative to the parameter of the M^{th} CSI-RS resource as the parameter of the L^{th} CSI-RS resource, and configures the offset in the system information.

An example in which the parameter of the CSI-RS resource includes the CSI-RS bandwidth and N=3 is used below to describe the process in which the network device determines the parameters of the N CSI-RS resources.
1. The network device selects the first CSI-RS resource as the reference CSI-RS resource.
2. The network device determines that a parameter CSI-RS bandwidth of the first CSI-RS resource is 10 Mbps.
3. The network device determines that a parameter CSI-RS bandwidth of the second CSI-RS resource is 11 Mbps. The network device determines that a parameter CSI-RS bandwidth of the third CSI-RS resource is 9 Mbps.
4. The network device determines that an offset of the parameter of the second CSI-RS resource relative to the parameter of the first CSI-RS resource is 1. The network device determines that an offset of the parameter of the third CSI-RS resource relative to the parameter of the first CSI-RS resource is -1.
5. The network device determines that the parameter CSI-RS bandwidth of the first CSI-RS resource is 10 Mbps and sets a reference CSI-RS resource identifier for the first CSI-RS resource. The network device determines that the offset of the second CSI-RS resource is 1. The network device determines that the offset of the second CSI-RS resource is 1. The network device configures the foregoing information in the system information.

It should be noted that, similar to the case in which the parameter of the CSI-RS resource includes the CSI-RS bandwidth, when the parameter of the CSI-RS resource includes another configuration parameter, a process in which the network device determines the parameters of the N CSI-RS resources is similar to that in the foregoing method, and details are not described herein again.

S302. The network device broadcasts the system information. Correspondingly, the terminal receives the system information from the network device.

It should be noted that, the terminal is already in the idle mode in this case, and the network device cannot detect the terminal. Consequently, the network device cannot send the UE-specific signaling to the terminal. In this case, to send the system information to the terminal, the network device sends the system information in the broadcast manner, so that the terminal in the idle mode within the coverage of the network device can receive the system information.

It should be noted that, a process in which the terminal receives the system information from the network device is as follows: The terminal periodically wakes up from a sleep mode, and after the terminal wakes up, the terminal receives the system information broadcast by the network device.

S303. The terminal performs beam measurement based on the N CSI-RS resources in the system information.

In a possible implementation, after the terminal receives the system information from the network device, the terminal performs beam measurement based on the CSI-RS resources in the system information and selects an appropriate beam pair to receive a paging message from the network device.

Optionally, when the N CSI-RS resources in the system information include one reference CSI-RS resource and N-1 offset CSI-RS resources, a method for the terminal to determine the parameter of each CSI-RS resource is as follows: The terminal determines an offset of a resource of a target CSI-RS and a parameter of the reference CSI-RS resource; and the terminal determines parameters of the N-1 offset CSI-RS resources based on the offset of the resource of the target CSI-RS and the parameter of the reference CSI-RS resource.

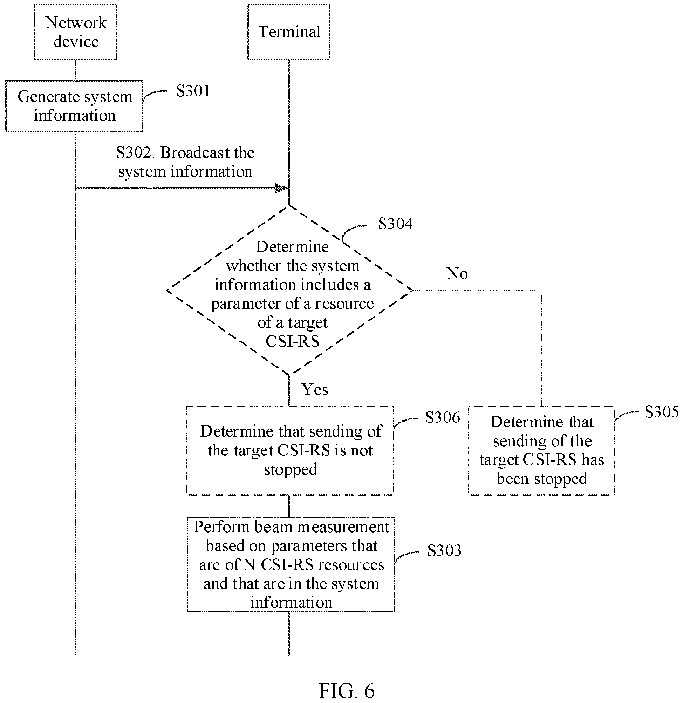

Based on the technical solution shown in FIG. 5, as shown in FIG. 6, after S302, the communication method provided in embodiments of this application further includes S304 to S306.

S304. The terminal determines whether the system information includes the parameter of the resource of the target CSI-RS.

Whether the system information includes the parameter of the resource of the target CSI-RS affects subsequent steps performed by the terminal. This is described as below.
I. When the system information does not include the parameter of the resource of the target CSI-RS, the terminal performs S305.

S305. The terminal determines that sending of the target CSI-RS has been stopped.

It should be noted that, when the system information sent by the network device does not include the parameter of the resource of the target CSI-RS, it indicates that the network device has stopped sending the resource of the target CSI-RS. On this basis, the terminal may determine that sending of the target CSI-RS has been stopped. Then, when the terminal is in the idle mode, the terminal does not receive the target CSI-RS.

Based on the foregoing technical solution, when the system information does not include the parameter of the resource of the target CSI-RS, the terminal determines that the resource of the target CSI-RS has been disabled. In this way, the network device does not need to send, to the terminal, indication information that the resource of the target CSI-RS has been disabled, so that signaling overheads of the network device are further reduced.

II. When the system information includes the parameter of the resource of the target CSI-RS, the terminal performs S306.

S306. The terminal determines that sending of the target CSI-RS is not stopped.

In a possible implementation, the system information in S301 may further include a first field. The first field is used to indicate that there is an association relationship between a CSI-RS and an SSB, and the association relationship may be a QCL relationship. The following describes in detail the association relationship between a CSI-RS and an SSB.

The network device has 64 SSBs and 64 CSI-RS resources. The network device may use 1-bit indication information to indicate that there is a one-to-one association relationship between 64 CSI-RS resource indexes and 64 SSB indexes.

The association relationship between CSI-RS indexes and SSB indexes may be in an ascending order association. For example, a CSI-RS index 0 is associated with an SSB index 0, a CSI-RS index 1 is associated with an SSB index 1, ..., and a CSI-RS index 63 is associated with an SSB index 63.

Alternatively, the association relationship between CSI-RS indexes and SSB indexes may be in a descending order association. For example, a CSI-RS index 63 is associated with an SSB index 0, a CSI-RS index 62 is associated with an SSB index 1, ..., and a CSI-RS index 0 is associated with an SSB index 63.

The terminal may determine, depending on whether the system information includes the first field, whether there is the association relationship between a CSI-RS and an SSB in the system information.

When the system information includes the first field, the system information may further include K second fields. The K second fields are used to indicate an SSB associated with K CSI-RS resources, where one second field is used to indicate an SSB associated with one CSI-RS resource. One CSI-RS resource may be associated with one SSB, one CSI-RS resource may be associated with a plurality of SSBs, or a plurality of CSI-RS resources may be associated with one SSB. This is not limited in this application.

It should be noted that, one CSI-RS resource may be associated with one SSB, one CSI-RS resource may be associated with a plurality of SSBs, or a plurality of CSI-RS resources may be associated with one SSB.

When the system information includes the first field, the terminal may determine, depending on whether the system information includes a second field indicating an association relationship between the target CSI-RS and an SSB, whether the system information includes the target CSI-RS.

When the system information includes the second field indicating the association relationship between the target CSI-RS and an SSB, the terminal determines that the system information includes the target CSI-RS. When the system information does not include the second field indicating the association relationship between the target CSI-RS and an SSB, the terminal determines that the system information does not include the target CSI-RS.

In a possible implementation, to further reduce resource configuration signaling overheads of the network device, the network device determines that a field set included in an NZP-CSI-RS-Resource (non-zero power CSI-RS resource) in the CSI-RS configuration information includes:
{nzp-CSI-RS-ResourceId, resourceMapping, powerControlOffset, powerControlOffsetSS, scramblingID, periodicityAndOffset, qcl-InfoPeriodicCSI-RS};
{nzp-CSI-RS-ResourceId, resourceMapping, powerControlOffsetSS, scramblingID, periodicityAndOffset, qcl-InfoPeriodicCSI-RS};
{resourceMapping, powerControlOffset, powerControlOffsetSS, scramblingID, periodicity AndOffset, qcl-InfoPeriodicCSI-RS};
{nzp-CSI-RS-ResourceId, resourceMapping, powerControlOffset, powerControlOffsetSS, scramblingID, periodicityAndOffset};
{nzp-CSI-RS-ResourceId, resourceMapping, powerControlOffset, powerControlOffsetSS, periodicity AndOffset, qcl-InfoPeriodicCSI-RS};
{nzp-CSI-RS-ResourceId, resourceMapping, powerControlOffsetSS, scramblingID, periodicityAndOffset};
{resourceMapping, powerControlOffsetSS, scramblingID, periodicity AndOffset};
{resourceMapping, powerControlOffsetSS, scramblingID, periodicityAndOffset, qcl-InfoPeriodicCSI-RS}; or
{resourceMapping, powerControlOffset, powerControlOffsetSS, scramblingID, periodicityAndOffset}.

The "nzp-CSI-RS-Resourceld" refers to an index of a CSI-RS resource.

The "resourceMapping" field is used to indicate a time-frequency resource location and a mapping port of a CSI-RS.

The "powerControlOffset" field is used to indicate an offset of a power of data relative to a power of a CSI-RS.

The "powerControlOffsetSS" field is used to indicate an offset of a transmit power of a CSI-RS relative to a power of a synchronization signal.

The "scramblingID" field is an initialization parameter used to scramble a CSI-RS sequence.

The "periodicityAndOffset" field is used to indicate a resource periodicity and a slot offset in the periodicity.

The "qcl-InfoPeriodicCSI-RS" field is used to indicate the QCL relationship between a CSI-RS resource and an SSB.

It should be noted that, when the CSI-RS configuration information does not include the "nzp-CSI-RS-ResourceId" field (in other words, the CSI-RS configuration information does not include the field indicating the index of the CSI-RS resource), the terminal and the network device may determine the index of the CSI-RS according to a first preset rule, so that the terminal and the network device can quickly determine the corresponding CSI-RS resource based on the index.

In embodiments of this application, the first preset rule includes at least one of a time sorting rule, a frequency sorting rule, and a periodicity sorting rule, or the first preset rule includes a network device configuration sequence sorting rule. The following separately describes the time sorting rule, the frequency sorting rule, the periodicity sorting rule, and the network device configuration sequence sorting rule.

### I. Time sorting rule

The time sorting rule is a rule used by the terminal and the network device to determine an index sequence of CSI-RS resources based on pieces of resource time in parameters of the CSI-RS resources in the CSI-RS configuration information.

The terminal and the network device may sort the CSI-RS resources based on a time sequence of the CSI-RS resources. Further, the terminal and the network device may determine indexes of the CSI-RS resources based on CSI-RS resource sorting.

In a possible implementation, the terminal and the network device may determine the index of the CSI-RS resource based on at least one of a system frame number, a slot, and a subframe.

The following uses an example in which the terminal determines the index of the CSI-RS resource based on the slot in the parameter of the CSI-RS resource for description.

The terminal determines that an index of a CSI-RS resource whose slot start location is 0 is 0. The terminal determines that an index of a CSI-RS resource whose slot start location is 1 is 1. According to the method, the terminal may determine the indexes of the CSI-RS resources. Similarly, the network device may also determine the indexes of the CSI-RS resources according to a same method.

In another possible implementation, the time sorting rule may further be used to determine the index of the CSI-RS resource based on at least one of a relative system frame number, a relative slot, and a relative subframe of the CSI-RS resource within a preset periodicity.

The preset periodicity may be one or more DRX cycles, or one or more system information modification periodicities.

The following uses an example in which the preset periodicity is one DRX cycle, duration of the DRX cycle is 160 ms, and the terminal determines the index of the CSI-RS resource based on the relative system frame number for description.

The terminal determines that a system frame number of the first frame in the second DRX cycle is 160. However, because the frame is the first frame in the second DRX cycle, the terminal determines that a relative system frame number of the first frame is 0. In this way, the terminal determines that an index of a CSI-RS whose system frame number is 160 is 0.

### II. Frequency sorting rule

The frequency sorting rule is a rule used by the terminal or the network device to determine indexes of CSI-RS resources based on CSI-RS frequency resource start locations in parameters of the CSI-RS resources in the CSI-RS configuration information.

The terminal and the network device may sort the CSI-RS resources based on the CSI-RS frequency resource start locations of the CSI-RS resources. Further, the terminal and the network device may determine indexes of the CSI-RS resources based on CSI-RS resource sorting.

### III. Periodicity sorting rule

The periodicity sorting rule is a rule used by the terminal or the network device to determine indexes of CSI-RS resources based on values of periodicities of the CSI-RS resources in the CSI-RS configuration information.

The terminal and the network device may sort the CSI-RS resources based on the values of periodicities of the CSI-RS resources. Further, the terminal and the network device may determine indexes of the CSI-RS resources based on CSI-RS resource sorting.

For example, the terminal determines that a periodicity of a CSI-RS resource A is 5 ms and a periodicity of a CSI-RS resource B is 10 ms. The terminal determines that a periodicity of a CSI-RS resource C is 15 ms. The terminal sorts, based on the values of periodicities, the CSI-RS resource A, the CSI-RS resource B, and the CSI-RS resource C in ascending order as follows: 1. the CSI-RS resource A; 2. the CSI-RS resource B; 3. the CSI-RS resource C. Based on the sorting, the terminal determines that an index of the CSI-RS resource A is 0, an index of the CSI-RS resource B is 1, and an index of the CSI-RS resource C is 2. Similarly, the network device may also determine the indexes of the CSI-RS resources according to a same method.

It should be noted that, when the first preset rule includes a plurality of sorting rules of the time sorting rule, the frequency sorting rule, and the period sorting rule, the terminal and the network device may set different priorities for different sorting rules. The terminal and the network device first determine the indexes of the CSI-RS resources according to a highest-priority sorting rule. CSI-RS resources with a same sorting feature corresponding to the highest-priority sorting rule (where the sorting feature is the time in the time sorting rule, a frequency in the frequency sorting rule, or the periodicity in the periodicity sorting rule) have a same index.

For CSI-RS resources with a same index, the terminal and the network device determine indexes of the CSI-RS resources according to a second-priority sorting rule. CSI-RS resources with a same sorting feature corresponding to the second-priority sorting rule have a same index.

For CSI-RS resources that still have a same index after two times of sorting, the terminal and the network device determine indexes of the CSI-RS resources according to a lowest-priority sorting rule.

### IV Network device configuration sequence sorting rule

The network device configuration sequence is a rule for determining indexes of CSI-RS resources based on a sequence in which the network device configures parameters of the CSI-RS resources.

For example, the CSI-RS configuration information includes a CSI-RS resource X, a CSI-RS resource Y, and a CSI-RS resource Z.

For the CSI-RS resource X, the CSI-RS resource Y, and the CSI-RS resource Z, the network device first configures a parameter of the CSI-RS resource X, then configures a parameter of the CSI-RS resource Y, and finally configures a parameter of the CSI-RS resource Z.

On this basis, the terminal determines that an index of the CSI-RS resource X is 0, an index of the CSI-RS resource Y is 1, and an index of the CSI-RS resource Z is 2.

Based on the foregoing technical solution, when the CSI-RS configuration information does not include the "nzp-CSI-RS-ResourceId" field, the terminal and the network device may determine the indexes of the CSI-RS resources according to the first preset rule.

It should be noted that, when the CSI-RS configuration information does not include the "qcl-InfoPeriodicCSI-RS" field (in other words, the CSI-RS configuration information does not include the field indicating the QCL relationship between a CSI-RS resource and an SSB), the terminal and the network device may determine the QCL relationship between a CSI-RS resource and an SSB according to a second preset rule.

The second preset rule may be any one of the following: indexes of CSI-RS resources are in one-to-one correspondence with SSB indexes, an index of one CSI-RS resource corresponds to a plurality of SSB indexes, and indexes of a plurality of CSI-RS resources correspond to one SSB index.

When indexes of CSI-RS resources are in one-to-one correspondence with SSB indexes, an association relationship between a CSI-RS index and an SSB index may be in an ascending order association, or an association relationship between a CSI-RS index and an SSB index may be in a descending order association. For descriptions of the ascending order association and the descending order association, refer to the descriptions of the first field. Details are not described herein again.

The terminal may assume that all CSI-RS resources have an associated SSB index, or CSI-RSs are associated with all SSB indexes, where the SSB index is an SSB index in an SSB periodicity. In this way, when the CSI-RS configuration information does not include the "nzp-CSI-RS-ResourceId" field, the terminal and the network device may determine the QCL relationship between a CSI-RS resource and an SSB according to the second preset rule.

The solutions in the foregoing embodiments of this application may be combined on a premise that there is no contradiction.

The foregoing mainly describes the solutions in embodiments of this application from a perspective of interaction between network elements. It may be understood that, to implement the foregoing functions, network elements, for example, the network device and the terminal, each include at least one of corresponding hardware structures and software modules for implementing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device and the terminal may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into units is an example, and is merely logical function division. In actual implementation, another division manner may be used.

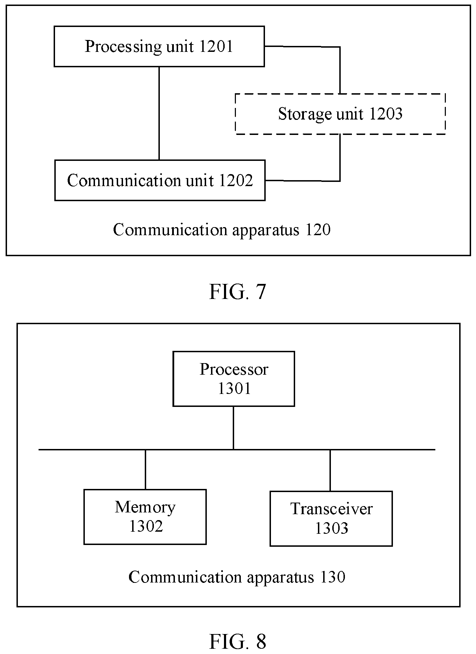

When an integrated unit is used, FIG. 7 is a possible schematic diagram of a structure of a communication apparatus (denoted as a communication apparatus 120) in the foregoing embodiments. The communication apparatus 120 includes a processing unit 1201 and a communication unit 1202, and may further include a storage unit 1203. The schematic diagram of the structure shown in FIG. 7 may be used to show structures of the network device and the terminal in the foregoing embodiments.

When the schematic diagram of the structure shown in FIG. 7 is used to show the structure of the terminal in the foregoing embodiments, the processing unit 1201 is configured to perform control management to an action of the terminal. For example, the processing unit 1201 is configured to perform, through the communication unit 1202, S102 and S103 in FIG. 2, S102, S104, S103, and S108 in FIG. 3, S102, S103, S202, and S203 in FIG. 4, S302 and S303 in FIG. 5, S302, S303, and S304 to S306 in FIG. 6, and/or an action performed by the terminal in another process described in embodiments of this application. The processing unit 1201 may communicate with another network entity through the communication unit 1202, for example, communicate with the network device shown in FIG. 2. The storage unit 1203 is configured to store program code and data of the terminal.

When the schematic diagram of the structure shown in FIG. 7 is used to show the structure of the terminal in the foregoing embodiments, the communication apparatus 120 may be a terminal, or may be a chip in the terminal.

When the schematic diagram of the structure shown in FIG. 7 is used to show the structure of the network device in the foregoing embodiments, the processing unit 1201 is configured to perform control management to an action of the network device. For example, the processing unit 1201 is configured to perform, through the communication unit 1202, S101 and S102 in FIG. 2, S101, S102, S104, and S105 to S107 in FIG. 3, S109, S110, S101, S102, and S201 to S203 in FIG. 4, S301 and S302 in FIG. 5, S301 and S302 in FIG. 6, and/or an action performed by the network device in another process described in embodiments of this application. The processing unit 1201 may communicate with another network entity through the communication unit 1202, for example, communicate with the terminal shown in FIG. 2. The storage unit 1203 is configured to store program code and data of the network device.

When the schematic diagram of the structure shown in FIG. 7 is used to show the structure of the network device in the foregoing embodiments, the communication apparatus 120 may be a network device, or may be a chip in the network device.

When the communication apparatus 120 is the terminal or the network device, the processing unit 1201 may be a processor or a controller, and the communication unit 1202 may be a communication interface, a transceiver, a transceiver machine, a transceiver circuit, a transceiver apparatus, or the like. The communication interface is a collective term, and may include one or more interfaces. The storage unit 1203 may be a memory. When the communication apparatus 120 is the chip in the terminal or the network device, the processing unit 1201 may be a processor or a controller, and the communication unit 1202 may be an input interface and/or an output interface, a pin, a circuit, or the like. The storage unit 1203 may be a storage unit (for example, a register or a cache) in the chip, or may be a storage unit outside the chip in the terminal or the network device (for example, a read-only memory (read-only memory, ROM for short) or a random access memory (random access memory, RAM for short)).

The communication unit may also be referred to as a transceiver unit. An antenna and a control circuit with a receiving and sending function in the communication apparatus 120 may be considered as the communication unit 1202 of the communication apparatus 120, and a processor with a processing function may be considered as the processing unit 1201 of the communication apparatus 120. Optionally, a component configured to implement a receiving function in the communication unit 1202 may be considered as a receiving unit. The receiving unit is configured to perform a receiving step in embodiments of this application. The receiving unit may be a receiver machine, a receiver, a receiver circuit, or the like. A component configured to implement a sending function in the communication unit 1202 may be considered as a sending unit. The sending unit is configured to perform a sending step in embodiments of this application. The sending unit may be a transmitter machine, a transmitter, a transmitter circuit, or the like.

When an integrated unit in FIG. 7 is implemented in a form of a software functional module and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium storing the computer software product includes any medium that can store program code, such as a USB flash drive, a removable hard disk, a read-only memory, a random access memory, a magnetic disk, an optical disc, or the like.

The unit in FIG. 7 may alternatively be referred to as a module. For example, the processing unit may be referred to as a processing module.

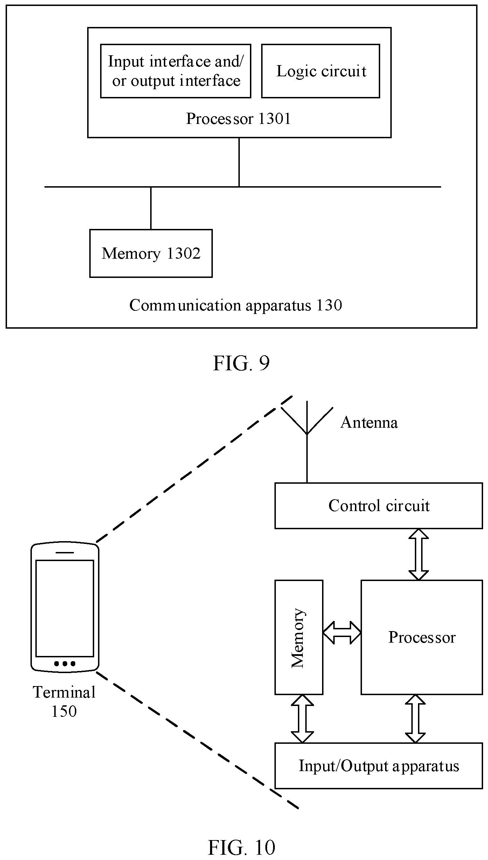

An embodiment of this application further provides a schematic diagram of a hardware structure of a communication apparatus (denoted as a communication apparatus 130). Refer to FIG. 8 or FIG. 9. The communication apparatus 130 includes a processor 1301, and optionally, further includes a memory 1302 connected to the processor 1301.

In a first possible implementation, refer to FIG. 8, and the communication apparatus 130 further includes a transceiver 1303. The processor 1301, the memory 1302, and the transceiver 1303 are connected through a bus. The transceiver 1303 is configured to communicate with another device or communication network. Optionally, the transceiver 1303 may include a transmitter and a receiver. A component configured to implement a receiving function in the transceiver 1303 may be considered as a receiver. The receiver is configured to perform a receiving step in embodiments of this application. A component configured to implement a sending function in the transceiver 1303 may be considered as a transmitter. The transmitter is configured to perform a sending step in embodiments of this application.

Based on the first possible implementation, the schematic diagram of the structure shown in FIG. 8 may be used to show a structure of the network device or the terminal in the foregoing embodiments.

When the schematic diagram of the structure shown in FIG. 8 is used to show the structure of the terminal in the foregoing embodiments, the processor 1301 is configured to perform control management to an action of the terminal. For example, the processor 1301 is configured to support the terminal in performing S102 and S103 in FIG. 2, S102, S104, S103, and S108 in FIG. 3, S102, S103, S202, and S203 in FIG. 4, S302 and S303 in FIG. 5, S302, S303, and S304 to S306 in FIG. 6, and/or an action performed by the terminal in another process described in embodiments of this application. The processor 1301 may communicate with another network entity through the transceiver 1303, for example, communicate with the network device shown in FIG. 2. The memory 1302 is configured to store program code and data of the terminal.

When the schematic diagram of the structure shown in FIG. 8 is used to show the structure of the network device in the foregoing embodiments, the processor 1301 is configured to perform control management to an action of the network device. For example, the processor 1301 is configured to support the network device in performing S101 and S102 in FIG. 2, S101, S102, S104, and S105 to S107 in FIG. 3, S109, S110, S101, S102, and S201 to S203 in FIG. 4, S301 and S302 in FIG. 5, S301 and S302 in FIG. 6, and/or an action performed by the network device in another process described in embodiments of this application. The processor 1301 may communicate with another network entity through the transceiver 1303, for example, communicate with the terminal shown in FIG. 2. The memory 1302 is configured to store program code and data of the network device.

In a second possible implementation, the processor 1301 includes a logic circuit and at least one of an input interface and an output interface. The output interface is configured to perform a sending action in a corresponding method, and the input interface is configured to perform a receiving action in the corresponding method.

Based on the second possible implementation, as shown in FIG. 9, the schematic diagram of the structure shown in FIG. 9 may be used to show a structure of the network device or the terminal in the foregoing embodiments.

When the schematic diagram of the structure shown in FIG. 9 is used to show the structure of the terminal in the foregoing embodiments, the processor 1301 is configured to perform control management to an action of the terminal. For example, the processor 1301 is configured to support the terminal in performing S102 and S103 in FIG. 2, S102, S104, S103, and S108 in FIG. 3, S102, S103, S202, and S203 in FIG. 4, S302 and S303 in FIG. 5, S302, S303, and S304 to S306 in FIG. 6, and/or an action performed by the terminal in another process described in embodiments of this application. The processor 1301 may communicate with another network entity through at least one of the input interface and the output interface, for example, communicate with the network device shown in FIG. 2. The memory 1302 is configured to store program code and data of the terminal.

When the schematic diagram of the structure shown in FIG. 9 is used to show the structure of the network device in the foregoing embodiments, the processor 1301 is configured to perform control management to an action of the network device. For example, the processor 1301 is configured to support the network device in performing S101 and S102 in FIG. 2, S101, S102, S104, and S105 to S107 in FIG. 3, S109, S110, S101, S102, and S201 to S203 in FIG. 4, S301 and S302 in FIG. 5, S301 and S302 in FIG. 6, and/or an action performed by the network device in another process described in embodiments of this application. The processor 1301 may communicate with another network entity through at least one of the input interface and the output interface, for example, communicate with the terminal shown in FIG. 2. The memory 1302 is configured to store program code and data of the network device.

FIG. 8 and FIG. 9 may also each show a system chip in the network device. In this case, an action performed by the network device may be implemented by the system chip. For a specific action performed, refer to the foregoing descriptions. Details are not described herein again. FIG. 8 and FIG. 9 may also each show a system chip in the terminal. In this case, an action performed by the terminal may be implemented by the system chip. For a specific action performed, refer to the foregoing descriptions. Details are not described herein again.

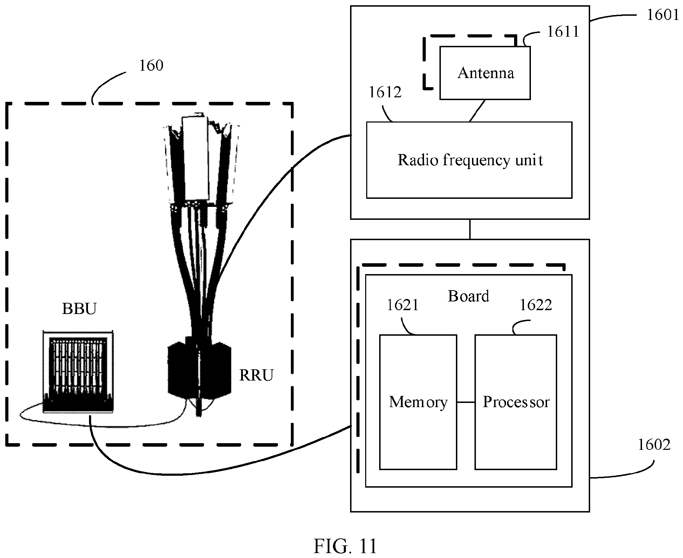

In addition, embodiments of this application further provide schematic diagrams of hardware structures of a terminal (denoted as a terminal 150) and a network device (denoted as a network device 160). For details, refer to FIG. 10 and FIG. 11.

FIG. 10 is a schematic diagram of a hardware structure of the terminal 150. For ease of description, FIG. 10 shows only main components of the terminal. As shown in FIG. 10, the terminal 150 includes a processor, a memory, a control circuit, an antenna, and an input/output apparatus.

The processor is mainly configured to: process a communication protocol and communication data, control the entire terminal, execute a software program, and process data of the software program. For example, the processor is configured to control the terminal to perform S102 and S103 in FIG. 2, S102, S104, S103, and S108 in FIG. 3, S102, S103, S202, and S203 in FIG. 4, S302 and S303 in FIG. 5, S302, S303, and S304 to S306 in FIG. 6, and/or an action performed by the terminal in another process described in embodiments of this application. The memory is mainly configured to store the software program and the data. The control circuit (which may also be referred to as a radio frequency circuit) is mainly configured to: perform conversion between a baseband signal and a radio frequency signal, and process the radio frequency signal. The control circuit together with the antenna may also be referred to as a transceiver, mainly configured to receive and send a radio frequency signal in a form of an electromagnetic wave. The input/output apparatus, for example, a touchscreen, a display, or a keyboard, is mainly configured to: receive data input by a user, and output data to the user.

After the terminal is powered on, the processor can read the software program in the memory, interpret and execute instructions of the software program, and process the data of the software program. When the processor needs to send data through the antenna, after performing baseband processing on the to-be-sent data, the processor outputs the baseband signal to the control circuit. The control circuit performs radio frequency processing on the baseband signal and then sends the radio frequency signal to the outside in a form of an electromagnetic wave through the antenna. When data is sent to the terminal, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 10 shows only one memory and only one processor. Actually, the terminal may have a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to: control the entire terminal, execute a software program, and process data of the software program. The processor in FIG. 10 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal may include a plurality of baseband processors to adapt to different network standards, and the terminal may include a plurality of central processing units to enhance a processing capability of the terminal. Each part of the terminal may be connected through various buses. The baseband processor may also be referred to as a baseband processing circuit or a baseband processing chip. The central processing unit may also be referred to as a central processing circuit or a central processing chip. A function of processing the communication protocol and the communication data may be built in the processor, or may be stored in the memory in a form of a software program, and the processor executes the software program to implement a baseband processing function.

FIG. 11 is a schematic diagram of a hardware structure of the network device 160. The network device 160 may include one or more radio frequency units, such as a remote radio unit (remote radio unit, RRU for short) 1601, and one or more baseband units (baseband units, BBUs for short) (which may also be referred to as digital units (digital units, DUs for short)) 1602.

The RRU 1601 may be referred to as a transceiver unit, a transceiver machine, a transceiver circuit, a transceiver, or the like, and may include at least one antenna 1611 and a radio frequency unit 1612. The RRU 1601 is mainly configured to send and receive a radio frequency signal and perform conversion between a radio frequency signal and a baseband signal. The RRU 1601 and the BBU 1602 may be physically disposed together, or may be physically disposed separately, for example, in a distributed base station.

The BBU 1602 is a control center of the network device, may also be referred to as a processing unit, and is mainly configured to perform baseband processing functions, such as channel coding, multiplexing, modulation, and spectrum spreading.

In an embodiment, the BBU 1602 may include one or more boards. A plurality of boards may jointly support a radio access network of a single access standard (such as an LTE network), or may separately support radio access networks of different access standards (such as an LTE network, a 5G network, or another network). The BBU 1602 further includes a memory 1621 and a processor 1622. The memory 1621 is configured to store necessary instructions and data. The processor 1622 is configured to control the network device to perform a necessary action. The memory 1621 and the processor 1622 may serve the one or more boards. In other words, a memory and a processor may be disposed separately on each board. Alternatively, the plurality of boards may share a same memory and a same processor. In addition, a necessary circuit may be further provided on each board.

It should be understood that, the network device 160 shown in FIG. 11 can perform S101 and S102 in FIG. 2, S101, S102, S104, and S105 to S107 in FIG. 3, S109, S110, S101, S102, and S201 to S203 in FIG. 4, S301 and S302 in FIG. 5, S301 and S302 in FIG. 6, and/or an action performed by the network device in another process described in embodiments of this application. Operations, functions, or operations and functions of each module in the network device 160 are separately set to implement corresponding procedures according to the foregoing method embodiments. For details, refer to the descriptions in the foregoing method embodiments. To avoid repetition, detailed descriptions are properly omitted herein.

In an implementation process, the steps of the methods in embodiments may be completed by using a hardware integrated logical circuit in the processor, or by using instructions in a form of software. The steps of the methods disclosed with reference to embodiments of this application may be directly performed and completed by a hardware processor, or may be performed and completed by a combination of hardware and software modules in the processor.

The processor in this application may include but is not limited to at least one of the following computing devices that run software: a central processing unit (central processing unit, CPU), a microprocessor, a digital signal processor (DSP), a microcontroller unit (microcontroller unit, MCU), or an artificial intelligence processor. Each computing device may include one or more cores configured to execute software instructions to perform an operation or processing. The processor may be an independent semiconductor chip, or may be integrated with another circuit to form a semiconductor chip. For example, the processor and another circuit (for example, an encoding/decoding circuit, a hardware acceleration circuit, or various buses and interface circuits) may be included in an SoC (system-on-a-chip). Alternatively, the processor may be integrated into an ASIC as a built-in processor of the ASIC, and the ASIC integrated with the processor may be independently packaged or may be packaged with another circuit. In addition to the core configured to execute the software instructions to perform the operation or processing, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

Embodiments of this application further provide a computer-readable storage medium, including instructions. When the instructions are run on a computer, the computer is enabled to perform any one of the foregoing methods.

Embodiments of this application further provide a computer program product including instructions. When the computer program product runs on a computer, the computer is enabled to perform any one of the foregoing methods.

Embodiments of this application further provide a communication system, including the foregoing network device and the foregoing terminal.

Embodiments of this application further provide a chip. The chip includes a processor and an interface circuit, where the interface circuit is coupled to the processor. The processor is configured to run a computer program or instructions, to implement the foregoing methods. The interface circuit is configured to communicate with another module outside the chip.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and is considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A communication method, comprising:
generating, by a network device, channel state information-reference signal CSI-RS configuration information, wherein the CSI-RS configuration information comprises first indication information, and the first indication information is used to indicate a terminal to receive a first CSI-RS in first duration that is after the terminal enters an idle mode or an inactive mode; and
sending, by the network device, the CSI-RS configuration information to the terminal.

2. The communication method according to claim 1, wherein the communication method further comprises:
continuously sending, by the network device, the first CSI-RS in the first duration.

3. The communication method according to claim 1 or 2, wherein the first duration is duration in which a first timer is in an active mode, and the first timer is a timer that is activated after the network device determines that the terminal enters the idle mode or the inactive mode.

4. The communication method according to claim 3, wherein active time of the first timer is time at which the network device sends a radio resource control RRC release message.

5. The communication method according to claim 3, wherein active time of the first timer is time at which the network device determines that an RRC release message is successfully sent.

6. The communication method according to any one of claims 3 to 5, wherein after the sending, by the network device, the CSI-RS configuration information to the terminal, the communication method further comprises:
when the first timer expires, determining, by the network device, whether there is a terminal that is in a connected mode and that receives the first CSI-RS; and
if there is no such terminal, stopping, by the network device, sending the first CSI-RS.

7. A communication method, comprising:
receiving, by a terminal, channel state information-reference signal CSI-RS configuration information from a network device, wherein the CSI-RS configuration information comprises first indication information, and the first indication information is used to indicate the terminal to receive a first CSI-RS in first duration that is after the terminal enters an idle mode or an inactive mode; and
in response to the first indication information, receiving, by the terminal, the first CSI-RS in the first duration that is after the terminal enters the idle mode or the inactive mode.

8. The communication method according to claim 7, wherein the first duration is duration in which a second timer is in an active mode, and the second timer is a timer that is activated after the terminal enters the idle mode or the inactive mode.

9. The communication method according to claim 8, wherein active time of the second timer is time at which the network device sends an RRC release message.

10. The communication method according to claim 8, wherein active time of the second timer is time at which the network device determines that an RRC release message is successfully sent.

11. The communication method according to any one of claims 8 to 10, wherein when the second timer expires, the communication method further comprises:
receiving, by the terminal, a synchronization signal block SSB sent by the network device.

12. A network device, comprising a processing unit and a communication unit, wherein
the processing unit is configured to generate channel state information-reference signal CSI-RS configuration information, wherein the CSI-RS configuration information comprises first indication information, and the first indication information is used to indicate a terminal to receive a first CSI-RS in first duration that is after the terminal enters an idle mode or an inactive mode; and
the communication unit is configured to send the CSI-RS configuration information to the terminal.

13. The network device according to claim 12, wherein the communication unit is further configured to:
continuously send the first CSI-RS in the first duration.

14. The network device according to claim 12 or 13, wherein the first duration is duration in which a first timer is in an active mode, and the first timer is a timer that is activated after the network device determines that the terminal enters the idle mode or the inactive mode.

15. The network device according to claim 14, wherein active time of the first timer is time at which the network device sends a radio resource control RRC release message.

16. The network device according to claim 14, wherein active time of the first timer is time at which the network device determines that an RRC release message is successfully sent.

17. The network device according to any one of claims 14 to 16, wherein when the first timer expires, the processing unit is further configured to determine whether there is a terminal that is in a connected mode and that receives the first CSI-RS; and
if there is no such terminal, the communication unit is further configured to stop sending the first CSI-RS.

18. A terminal, comprising a processing unit and a communication unit, wherein
the communication unit is configured to receive channel state information-reference signal CSI-RS configuration information from a network device, wherein the CSI-RS configuration information comprises first indication information, and the first indication information is used to indicate the terminal to receive a first CSI-RS in first duration that is after the terminal enters an idle mode or an inactive mode; and
the processing unit is configured to receive, in response to the first indication information, the first CSI-RS through the communication unit in the first duration that is after the terminal enters the idle mode or the inactive mode.

19. The terminal according to claim 18, wherein the first duration is duration in which a second timer is in an active mode, and the second timer is a timer that is activated after the terminal enters the idle mode or the inactive mode.

20. The terminal according to claim 19, wherein active time of the second timer is time at which the network device sends an RRC release message.

21. The terminal according to claim 19, wherein active time of the second timer is time at which the network device determines that an RRC release message is successfully sent.

22. The terminal according to any one of claims 19 to 21, wherein when the second timer expires, the communication unit is further configured to:
receive a synchronization signal block SSB sent by the network device.

23. A network device, comprising a processor and a communication interface, wherein the communication interface is coupled to the processor, and the processor is configured to run a computer program or instructions to implement the method according to any one of claims 1 to 6.

24. A terminal, comprising a processor and a communication interface, wherein the communication interface is coupled to the processor, and the processor is configured to run a computer program or instructions to implement the method according to any one of claims 7 to 11.

25. A computer-readable storage medium, wherein the computer-readable storage medium stores instructions; and when the instructions are run on a computer, the computer is enabled to perform the method according to any one of claims 1 to 6.

26. A computer-readable storage medium, wherein the computer-readable storage medium stores instructions; and when the instructions are run on a computer, the computer is enabled to perform the method according to any one of claims 7 to 11.

27. A computer program product, wherein the computer program product comprises instructions; and when the instructions are run on a computer, the computer is enabled to perform the method according to any one of claims 1 to 6.

28. A computer program product, wherein the computer program product comprises instructions; and when the instructions are run on a computer, the computer is enabled to perform the method according to any one of claims 7 to 11.

29. A chip, comprising a processor and an interface, wherein the processor is coupled to a memory over the interface; and when the processor executes a computer program or instructions in the memory, the method according to any one of claims 1 to 6 is performed.

30. A chip, comprising a processor and an interface, wherein the processor is coupled to a memory over the interface; and when the processor executes a computer program or instructions in the memory, the method according to any one of claims 7 to 11 is performed.
